(19) Europäisches Patentamt
European Patent Office
Office européen des brevets

(11) Veröffentlichungsnummer: **0 025 019**
**B1**

(12) **EUROPÄISCHE PATENTSCHRIFT**

(45) Veröffentlichungstag der Patentschrift: **09.02.83**

(51) Int. Cl.[3]: **C 07 C 147/05**, C 07 C 147/14, A 01 N 41/10

(21) Anmeldenummer: **80810263.6**

(22) Anmeldetag: **25.08.80**

(54) **Sulfinyl- und Sulfonylacetanilide, Verfahren zu deren Herstellung und deren Verwendung als Mikrobizide.**

(30) Priorität: **29.08.79 CH 7831/79**

(43) Veröffentlichungstag der Anmeldung: **11.03.81 Patentblatt 81/10**

(45) Bekanntmachung des Hinweises auf die Patenterteilung: **09.02.83 Patentblatt 83/6**

(84) Benannte Vertragsstaaten: **AT BE CH DE FR GB IT LI NL**

(56) Entgegenhaltungen: **DE-A-2 515 091**

(73) Patentinhaber: **CIBA-GEIGY AG, Patentabteilung Postfach, CH-4002 Basel (CH)**

(72) Erfinder: **Hubele, Adolf, Dr., Obere Egg 9, CH-4465 Magden (CH)**
Erfinder: **Riebli, Peter, Dittingerstrasse 12, CH-4053 Basel (CH)**
Erfinder: **Eckhardt, Wolfgang, Dr., Breslauerstrasse 16, D-7850 Lörrach (DE)**
Erfinder: **Kunz, Walter, Dr., 79 Gleneagles Road Flixton, Manchester M31 2SA (GB)**

**EP 0 025 019 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Sulfinyl- und Sulfonylacetanilide, Verfahren zu deren Herstellung und deren Verwendung als Mikrobizide

Die vorliegende Erfindung betrifft eine Verbindung der Formel I

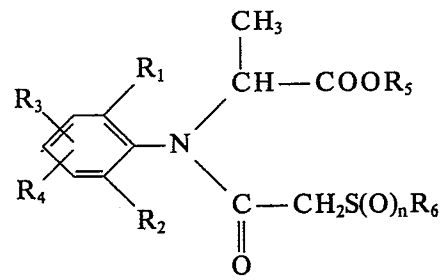

(I)

worin $R_1$ $C_1-C_3$-Alkyl, $C_1-C_3$-Alkoxy oder Halogen; $R_2$ $C_1-C_3$-Alkyl, $C_1-C_3$-Alkoxy oder Halogen; $R_3$ Wasserstoff, $C_1-C_3$-Alkyl oder Halogen; $R_4$ Wasserstoff oder Methyl bedeuten, $R_5$ für $C_1-C_3$-Alkyl steht und $R_6$ $C_1-C_4$-Alkyl und n 1 oder 2 bedeuten.

Unter Alkyl oder Alkylteil eines anderen Substituenten sind je nach Zahl der gegebenen C-Atome z. B. folgende Gruppen zu verstehen: Methyl, Äthyl, Propyl, Butyl sowie ihre Isomeren, z. B. iso-Propyl, iso-Butyl, sek-Butyl, tert-Butyl usw., Halogen steht für Fluor, Chlor, Brom oder Jod.

Verbindungen der Formel I besitzen mikrobizide Wirkung.

Die Verbindungen der Formel I können nach einer ganzen Reihe von Methoden, wie z. B. nachfolgend aufgeführt, hergestellt werden. In den Formeln II bis XIII haben $R_1$ bis $R_6$ sowie n die unter Formel I angegebenen Bedeutungen. Hal steht für Halogen, vorzugsweise für Chlor oder Brom und M für Wasserstoff oder ein Metall-, vorzugsweise Alkali- oder Erdalkalikation.

Im einzelnen kann man wie folgt verfahren, indem man

A. eine Verbindung der Formel II mit einer Thioverbindung III zu einem Zwischenprodukt IV umsetzt und letzteres zum Endprodukt I oxidiert:

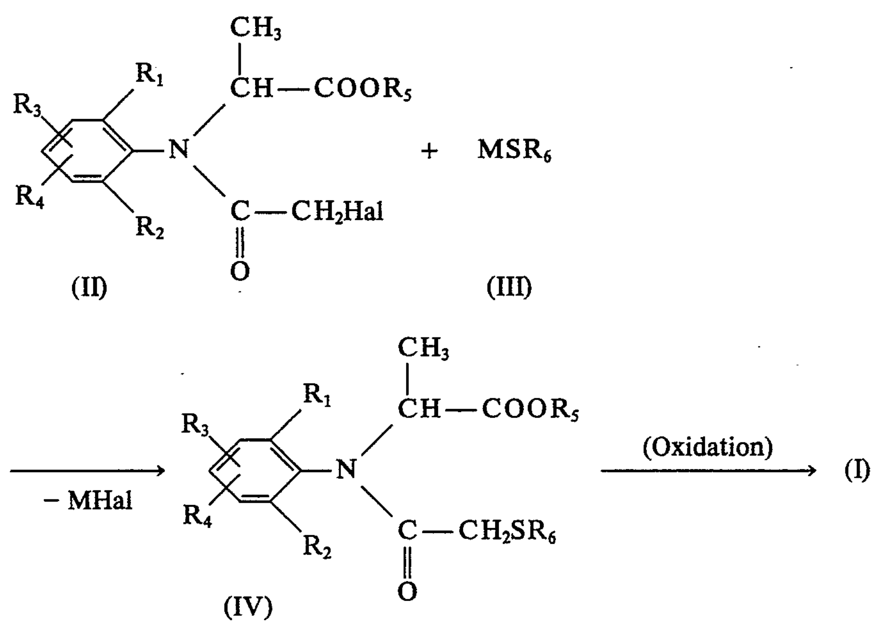


B. eine Verbindung der Formel II mit einer Thioverbindung V direkt zum Endprodukt I umsetzt:

$$(II) + MS(O)_nR_6 \xrightarrow[-\,MHal]{} (I)$$

(V)

In den Fällen, in denen bei den Verfahren A und B der Substituent M für Wasserstoff steht, ist die Verwendung eines salzbildenden Mittels angebracht, wie z. B. eines Oxids, Hydroxids, Hydrids usw. von Alkali- oder Erdalkalimetallen,

C. ein substituiertes Anilid VI mit einem Säurehalogenid VII zum Endprodukt I umsetzt:

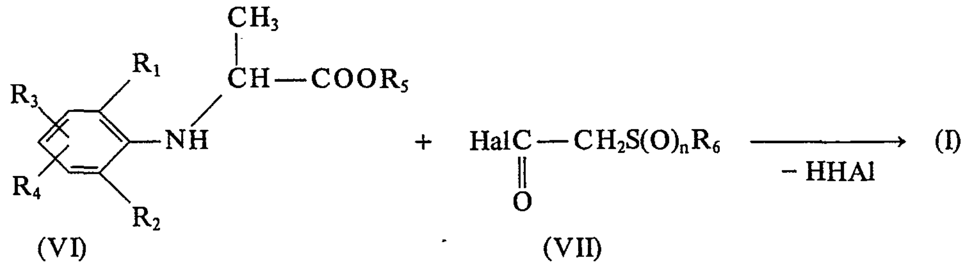


(VI) (VII)

D. ein substituiertes Anilid VI mit einem Säurehalogenid VIII zu einem Zwischenprodukt IV umsetzt und letzteres wie bei Verfahren A zum Endprodukt I oxidiert:

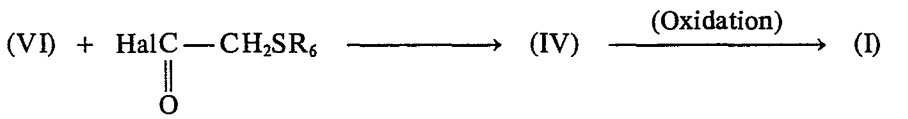


(VIII)

E. ein substituiertes Anilin IX mit einem Säurehalogenid X zu einem Anilid XI umsetzt und letzteres mit einer Verbindung der Formel XII in das Endprodukt XIII überführt:

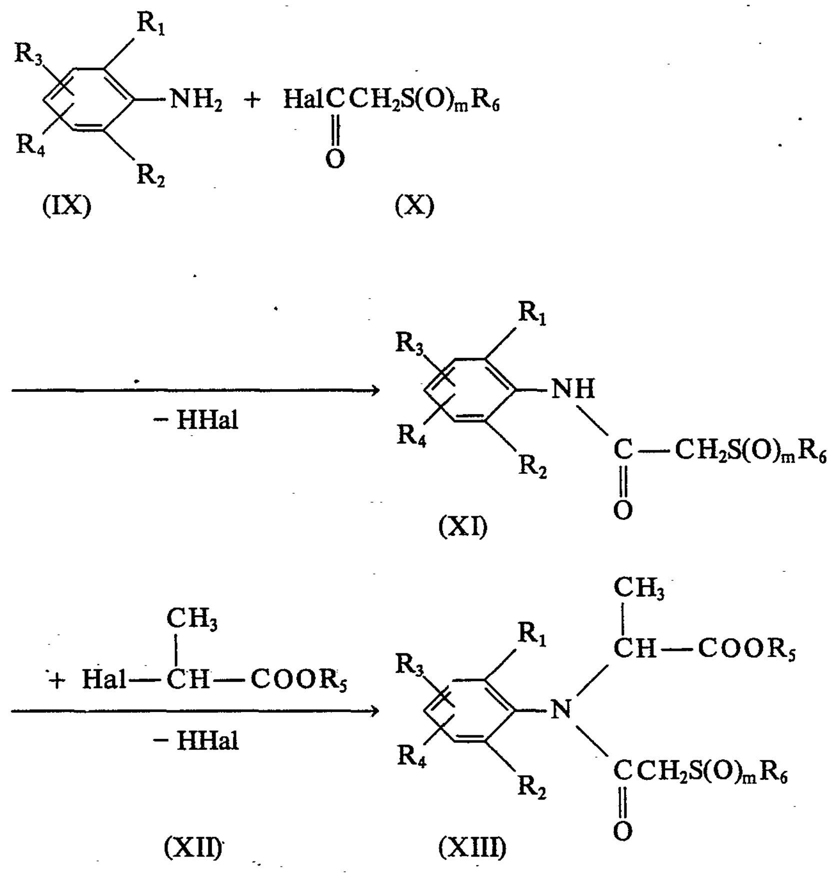


(IX) (X)

(XI)

(XII) (XIII)

Hierbei kann m 0, 1 oder 2 sein. Im Falle von m = 0 ist eine Oxidation erforderlich; wobei entweder das Produkt XI oder XIII oxidiert wird. Bei m = 1 oder m = 2 sind XIII und I identisch,

F. ein substituiertes Anilin IX mit einem Säurehalogenid XIV zu einem Anilid XV umsetzt. Letzteres wird dann mit einer Verbindung der Formel XVI in das Zwischenprodukt XI und dieses anschließend mit einem Alkylhalogenid XII zum Endprodukt XIII überführt

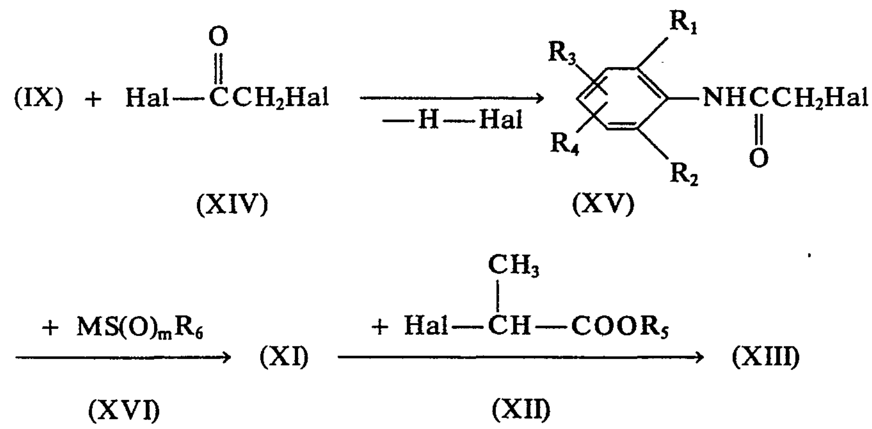


Hierbei kann m, 0, 1 oder 2 sein. Im Falle von m = 0 ist eine Oxidation erforderlich; wobei entweder das Zwischenprodukt XI oder das Produkt XIII (wie bei Verfahren E) oxidiert wird. Bei m = 1 oder m = 2 sind XIII und I identisch.

Bei den Herstellungsverfahren E und F kann die Verbindung der Formel XI vorteilhafterweise mit Butyl-Lithium oder Na-Hydrid zuerst in das entsprechende Alkalisalz überführt werden oder die beiden Verfahren werden in Gegenwart eines säurebindenden Mittels durchgeführt.

Bei den Verfahren A, D, E und F können zur Oxidation der Thioäther- bzw. Sulfoxidgruppe in den Verbindungen der Formeln IV und XIII z. B. Persäuren wie $H_2O_2$, Perbenzoesäure, Metachlorperbenzoesäure, $HJO_4$ oder auch Kaliumpermanganat usw. verwendet werden.

In manchen Fällen ist die Verwendung von säurebindenden Mitteln bzw. Kondensationsmitteln vorteilhaft. Als solche kommen z. B. anorganische Basen wie Oxide, Hydroxide, Hydrogencarbonate, Carbonate oder Hydride von Alkali- und Erdalkalimetallen sowie Natriumacetat in Betracht.

Entstehender Halogenwasserstoff kann aber auch mittels Durchleiten von Inertgas z. B. $N_2$ aus dem Reaktionsgemisch vertrieben werden.

Bei allen beschriebenen Verfahren können grundsätzlich solche Lösungsmittel verwendet werden, die sich gegenüber den Reaktionspartnern inert verhalten. Hierzu eignen sich beispielsweise aromatische Kohlenwasserstoffe wie Benzol, Toluol, Xylole; aliphatische Kohlenwasserstoffe wie Petroläther, Ligroin, Cyclohexan; halogenierte Kohlenwasserstoffe wie Dichlormethan, Chloroform, Tetrachlorkohlenstoff, 1,2-Dichloräthan, Tetrachloräthylen, Chlorbenzol; Äther und ätherartige Verbindungen wie Dialkyläther (Diäthyläther, t.-Butylmethyläther, Diisopropyläther), Dimethoxyäthan, Dioxan, Tetrahydrofuran, Anisol; Nitrile wie Acetonitril, Propionitril; Ketone wie Aceton, Methyläthylketon; Ester wie Äthylacetat, Butylacetat; oder Dimethylsulfoxid. Auch Gemische solcher Lösungsmittel untereinander können verwendet werden.

Die verschiedenen Verfahren sind ebenfalls ein Teil der Erfindung. Die Ausgangsstoffe bzw. Zwischenprodukte der Formeln II, IV und XIII zeigen ebenfalls eine mikrobizide Wirkung.

Alle Ausgangsstoffe sind an sich bekannt und werden nach an sich bekannten Methoden hergestellt.

Vgl. J. Org. Chem. 30, 4101 (1965), Tetrahedron 1967, 487, Tetrahedron 1967, 493.

In den folgenden Referenzen werden acylierte Anilide als Herbizide beschrieben; Hinweise auf eine fungizide Wirkung fehlen, da keine der dort genannten Verbindungen brauchbare Fungizidwirkung aufweist:

US-PS 3 966 811, US-PS 4 113 464, US-PS 3 946 043, US-PS 3 946 044, US-PS 3 946 045.

Die Zwischenprodukte der Formeln IV und XIII (m = o) sind aus DE-OS 2 515 091 als Fungizide bekannt. Die erfinderischen Verbindungen, der hierin beschriebenen Formel I, zeigen jedoch gegenüber den in DE-OS 2 515 091 erwähnten Substanzen eine wesentlich bessere Fungizid-Wirkung.

Die Verbindungen der Formel I besitzen nachbarständig zum Stickstoff ein asymmetrisches Kohlenstoff-Atom in der Ester-Seitenkette und können auf übliche Art in ihre optischen Antipoden gespalten werden. Hierbei besitzen die beiden Enantiomeren unterschiedliche mikrobizide Eigenschaften. Die Racemat-Spaltung kann z. B. durch fraktionierte Kristallisation der Salze von VI mit einer optisch aktiven Säure (wie z. B. L-Milchsäure) und Weiterreaktion der optisch reinen Verbindungen von VI zu I durchgeführt werden.

Je nach Substitution können weitere asymmetrische Kohlenstoffatome im Molekül vorhanden sein.

Unabhängig von der genannten optischen Isomerie wird eine Atropisomerie um die ⟩N-Phenyl-Achse beobachtet, wenn der Phenylkern unsymmetrisch zu dieser Achse substituiert ist.

Sofern keine gezielte Synthese zur Isolierung reiner Isomeren durchgeführt wird, fällt normalerweise ein Produkt der Formel I als Gemisch dieser möglichen Isomeren an.

Mikrobizide mit nachfolgenden Substituententypen oder Kombinationen dieser untereinander werden bevorzugt.

Bei $R_1$: — a) $C_1-C_2$-Alkyl
b) Methyl
c) Methyl

Bei $R_2$: — a) $C_1-C_4$-Alkyl, $C_1-C_2$-Alkoxy, Halogen
b) Methyl, Methoxy, Chlor
c) Methyl

Bei $R_3$: — a) Wasserstoff, $C_1-C_2$-Alkyl, Halogen
b) Wasserstoff, Methyl, Chlor
c) Wasserstoff, 3-Methyl, 3-Chlor

Bei $R_4$: — a) Wasserstoff, Methyl
b) Wasserstoff, 5-Methyl, 5-Chlor

Bei $R_5$: — a) $C_1-C_3$-Alkyl
b) $C_1-C_2$-Alkyl
c) Methyl

Bei $R_6$: — a) $C_1-C_3$-Alkyl

Bei n: — a) 1 oder 2
b) 2

Es ergeben sich somit z. B. folgende bevorzugte Gruppen von Verbindungen der Formel I:

A. $R_1$ = $C_1-C_2$-Alkyl
$R_2$ = $C_1-C_2$-Alkyl, $C_1-C_2$-Alkoxy, Halogen
$R_3$ = Wasserstoff, $C_1-C_2$-Alkyl, Halogen
$R_4$ = Wasserstoff, Methyl
$R_5$ = $C_1-C_3$-Alkyl
$R_6$ = $C_1-C_3$-Alkyl
n = 1 oder 2

B. $R_1$ = Methyl
$R_2$ = Methyl, Methoxy, Chlor
$R_3$ = Wasserstoff, Methyl, Chlor
$R_4$ = Wasserstoff, Methyl
$R_5$ = $C_1-C_2$-Alkyl
$R_6$ = $C_1-C_3$-Alkyl
n = 2

C. $R_1$ = Methyl
$R_2$ = Methyl
$R_3$ = Wasserstoff, 3-Methyl, 3-Chlor
$R_4$ = Wasserstoff, 5-Methyl, 5-Chlor
$R_5$ = Methyl
$R_6$ = $C_1-C_3$-Alkyl
n = 1 oder 2

Aufgrund ihrer sehr guten mikorbiziden Wirkung sind folgende Einzelverbindungen besonders bevorzugt:

N-(1'-Methoxycarbonyl-äthyl)-N-methy sulfonylacetyl-2,6-dimethylanilin
N-(1'-Methoxycarbonyl-äthyl)-N-äthylsulfonylacetyl-2,6-dimethylanilin
N-(1'-Methoxycarbonyl-äthyl)-N-methylsulfonylacetyl-2,3,6-trimethylanilin

Die nachfolgenden Beispiele dienen zur näheren Erläuterung der Erfindung, ohne dieselbe einzuschränken. Die Temperaturen sind in Celsiusgraden angegeben. Sofern nicht anders vermerkt, ist bei der Nennung eines Wirkstoffs der Formel I stets das racemische Gemisch gemeint.

Beispiel 1

a) Herstellung des Zwischenprodukts

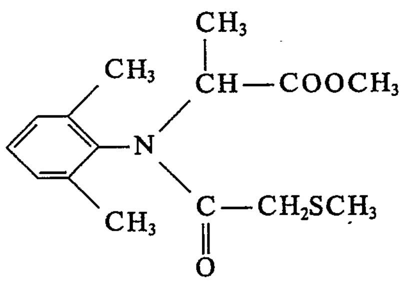

(XIV)

N-(1'-Methoxycarbonyl-äthyl)-N-[(methylthio)acetyl]-2,6-dimethylanilin.

Zu 650 g einer 10%igen Natriummethylat-Lösung läßt man bei Raumtemperatur 57,6 g Methylmerkaptan, gelöst in 50 ml Methanol, zutropfen. Nach Abklingen der schwach exothermen Reaktion werden 283,5 g N-(1'-Methoxycarbonyläthyl)-N-chloracetyl-2,6-dimethylanilin portionsweise zugegeben. Nach zwölfstündigem Rühren wird die Suspension filtriert und das Filtrat bis zur Trockne eingedampft. Der ölige Rückstand wird in Diäthyläther aufgenommen, der unlösliche Teil abfiltirert und das Filtrat im Vakuum eingeengt. Nach Zugabe von Petroläther erhält man beigefarbene Kristalle vom Schmp. 65—67°.

b) Herstellung des Endprodukts

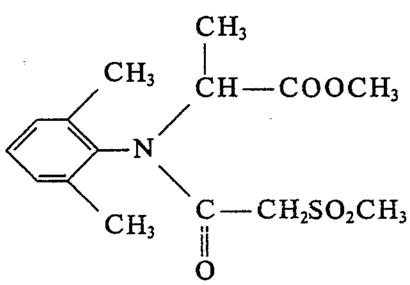

(XV)
(Verb. Nr. 2)

N-(1'-Methoxycarbonyl-äthyl)-N-methylsulfonylacetyl-2,6-dimethylanilin.

Zu 17 g des nach a) hergestellten N-(1'-Methoxycarbonyläthyl)-N-[(methylthio)acetyl]-2,6-dimethylanilins in 250 ml Eisessig und 250 ml Acetanhydrid läßt man bei 0° innerhalb von 30 Minuten 15,5 ml 30%iges Wasserstoffperoxid zutropfen. Die Lösung wird noch 20 Minuten bei Raumtemperatur gerührt und dann im Vakuum eingeengt. Der ölige Rückstand wird in Chloroform aufgenommen, dreimal mit je 250 ml Wasser gewaschen, über Natriumsulfat getrocknet, filtriert und das Filtrat bis zur Trockne eingedampft. Die zurückbleibenden Kristalle haben einen Schmp. von 127—129°.

Auf diese Weise oder nach einer der hierin beschriebenen Methoden können folgende Verbindungen der Formel I hergestellt werden:

Tabelle I

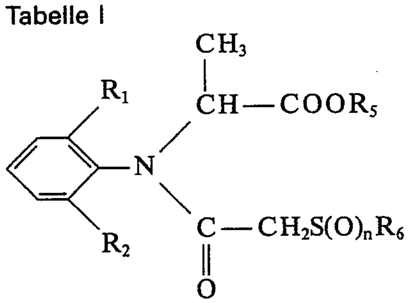

(XVI)

| Verb. Nr. | $R_1$ | $R_2$ | $R_5$ | $R_5$ | n | Physik. Konst. |
|---|---|---|---|---|---|---|
| 1 | $CH_3$ | $CH_3$ | $CH_3$ | $CH_3$ | 1 | Öl |
| 2 | $CH_3$ | $CH_3$ | $CH_3$ | $CH_3$ | 2 | Smp. 127–129° |
| 3 | $CH_3$ | $C_2H_5$ | $CH_3$ | $CH_3$ | 1 | Harz |
| 4 | $CH_3$ | $C_2H_5$ | $CH_3$ | $CH_3$ | 2 | Smp. 127–130° |
| 5 | $CH_3$ | $CH_3$ | $C_2H_5$ | $CH_3$ | 1 | Harz |
| 6 | $CH_3$ | $CH_3$ | $C_2H_5$ | $CH_3$ | 2 | Smp. 128–130° |
| 7 | $CH_3$ | $CH_3$ | $CH_3$ | $C_2H_5$ | 1 | |
| 8 | $CH_3$ | $CH_3$ | $CH_3$ | $C_2H_5$ | 2 | Smp. 133–134° |
| 9 | $CH_3$ | $C_2H_5$ | $C_2H_5$ | $CH_3$ | 1 | |
| 10 | $CH_3$ | $C_2H_5$ | $C_2H_5$ | $CH_3$ | 2 | Smp. 124–126° |
| 11 | $CH_3$ | $C_2H_5$ | $C_2H_5$ | $C_2H_5$ | 1 | Öl |
| 12 | $CH_3$ | $C_2H_5$ | $C_2H_5$ | $C_2H_5$ | 2 | Smp. 119–122° |
| 13 | $C_2H_5$ | $C_2H_5$ | $CH_3$ | $CH_3$ | 2 | |
| 14 | $C_2H_5$ | $C_2H_5$ | $CH_3$ | $C_2H_5$ | 2 | |
| 15 | $CH_3$ | $CH_3$ | $C_3H_7$-i | $CH_3$ | 1 | |
| 16 | $CH_3$ | $CH_3$ | $C_3H_7$-i | $C_3H_7$-i | 2 | Smp. 101–106° |
| 17 | $CH_3$ | $CH_3$ | $C_3H_7$-i | $CH_3$ | 2 | Smp. 113–115,5° |
| 18 | $CH_3$ | $CH_3$ | $CH_3$ | $C_3H_7$-i | 2 | Smp. 129–130° |
| 19 | $CH_3$ | $CH_3$ | $C_2H_5$ | $C_3H_7$-i | 2 | |
| 20 | $CH_3$ | $CH_3$ | $CH_3$ | $C_3H_7$-n | 2 | Smp. 130–131° |
| 21 | $CH_3$ | $CH_3$ | $CH_3$ | 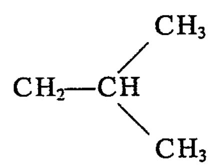 | 2 | |
| 22 | $CH_3$ | $CH_3$ | $CH_3$ | $C_4H_9$-n | 2 | Smp. 133–135° |
| 23 | $C_3H_7$-i | $CH_3$ | $CH_3$ | $CH_3$ | 2 | |
| 24 | $C_3H_7$-i | $C_2H_5$ | $CH_3$ | $CH_3$ | 2 | |
| 25 | $CH_3$ | $CH_3$ | $C_3H_7$-i | $C_2H_5$ | 2 | Smp. 124–125,5° |

Tabelle II

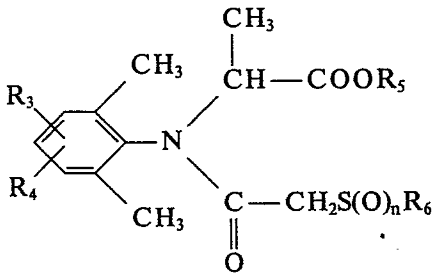

(XVII)

| Verb. Nr. | $R_3$ | $R_4$ | $R_5$ | $R_6$ | n | |
|---|---|---|---|---|---|---|
| 26 | H | 4-$CH_3$ | $CH_3$ | $CH_3$ | 1 | Smp. 121–124° |
| 27 | H | 4-$CH_3$ | $CH_3$ | $CH_3$ | 2 | |
| 28 | 3-$CH_3$ | 4-$CH_3$ | $CH_3$ | $CH_3$ | 2 | |
| 29 | 3-$CH_3$ | 5-$CH_3$ | $CH_3$ | $CH_3$ | 2 | |
| 30 | H | 5-$CH_3$ | $CH_3$ | $CH_3$ | 2 | |
| 31 | 3-Cl | H | $CH_3$ | $CH_3$ | 2 | |
| 32 | 3-Cl | 5-$CH_3$ | $CH_3$ | $CH_3$ | 2 | |
| 33 | 3-Cl | 5-$CH_3$ | $C_2H_5$ | $CH_3$ | 2 | |
| 34 | 3-Cl | 5-$CH_3$ | $CH_3$ | $C_2H_5$ | 2 | |
| 35 | 3-$C_3H_{7-i}$ | H | $CH_3$ | $CH_3$ | 2 | |
| 36 | 3-$C_3H_{7-i}$ | 5-$CH_3$ | $CH_3$ | $CH_3$ | 2 | |
| 37 | 4-Cl | H | $CH_3$ | $CH_3$ | 2 | |

Tabelle III

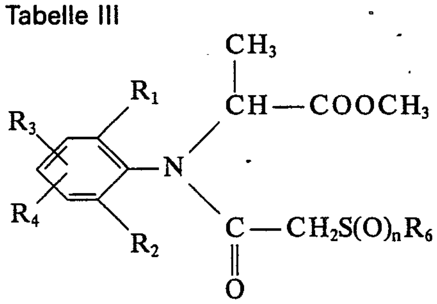

(XVIII)

| Verb. Nr. | $R_1$ | $R_2$ | $R_3$ | $R_4$ | $R_6$ | n |
|---|---|---|---|---|---|---|
| 38 | $CH_3$ | Cl | 3-$CH_3$ | 4-$CH_3$ | $CH_3$ | 2 |
| 39 | $CH_3$ | Cl | H | H | $CH_3$ | 2 |
| 40 | $CH_3$ | Cl | H | 5-$CH_3$ | $C_2H_5$ | 2 |
| 41 | Cl | Cl | H | 5-$CH_3$ | $CH_3$ | 2 |
| 42 | Cl | Cl | 3-$CH_3$ | 5-$C_2H_5$ | $CH_3$ | 2 |
| 43 | Cl | $CH_3$ | 3-$CH_3$ | 5-$CH_3$ | $C_2H_5$ | 2 |
| 44 | Cl | $CH_3$ | 3-Cl | H | $CH_3$ | 2 |
| 45 | Cl | $CH_3$ | 3-Cl | H | $CH_3$ | 1 |
| 46 | Cl | Cl | 3-Cl | H | $CH_3$ | 2 |
| 47 | Cl | $CH_3$ | 3-Cl | 4-$CH_3$ | $CH_3$ | 2 |
| 48 | Cl | $CH_3$ | H | H | $C_3H_{7-i}$ | 2 |
| 49 | $CH_3$ | Cl | 3-Cl | 4-$CH_3$ | $C_2H_5$ | 2 |
| 50 | $CH_3$ | Cl | H | 4-$CH_3$ | $CH_3$ | 2 |
| 51 | Cl | Cl | 4-Cl | H | $CH_3$ | 1 |
| 52 | $OCH_3$ | $CH_3$ | H | H | $CH_3$ | 1 |
| 53 | $OCH_3$ | $CH_3$ | H | H | $CH_3$ | 2 |
| 54 | $OCH_3$ | $OCH_3$ | H | H | $CH_3$ | 2 |
| 55 | $OC_2H_5$ | $CH_3$ | H | H | $CH_3$ | 2 |
| 56 | $OC_2H_5$ | $OC_2H_5$ | H | H | $CH_3$ | 2 |
| 57 | $OC_3H_{7-n}$ | $CH_3$ | H | H | $CH_3$ | 2 |
| 58 | $OCH_3$ | $CH_3$ | 3-$CH_3$ | H | $CH_3$ | 2 |
| 59 | $OCH_3$ | $OCH_3$ | H | H | $C_2H_5$ | 2 |
| 60 | $OCH_3$ | $OCH_3$ | H | H | $C_3H_{7-i}$ | 2 |
| 61 | $OC_2H_5$ | $OC_2H_5$ | H | H | $C_3H_{7-i}$ | 2 |
| 62 | $OCH_3$ | $OCH_3$ | Cl | H | $CH_3$ | 2 |
| 63 | $OCH_3$ | $OCH_3$ | 3-$CH_3$ | 5-$CH_3$ | $CH_3$ | 2 |

Es wurde überraschend gefunden, daß Verbindungen der Struktur der Formel I ein für praktische Bedürfnisse sehr günstiges Mikrobizid-Spektrum zum Schutze von Kulturpflanzen aufweisen.

Das Haupteinsatzgebiet von Verbindungen der Formel I liegt in der Bekämpfung von schädlichen Mikroorganismen, vor allem von phytopathogenen Pilzen. So besitzen die Verbindungen der Formel I eine für praktische Bedürfnisse sehr günstige kurative und präventive Wirkung zum Schutz von Kulturpflanzen ohne diese durch unerwünschte Nebenwirkungen zu beeinflussen. Kulturpflanzen seien im Rahmen vorliegender Erfindung beispielsweise:

Getreide: (Weizen, Gerste, Roggen, Hafer, Reis);
Rüben: (Zucker- und Futterrüben);
Kern-, Stein- und Beerenobst: (Äpfel, Birnen, Pflaumen, Pfirsiche, Mandeln, Kirschen, Erd-, Him- und Brombeeren);
Hülsenfrüchte: (Bohnen, Linsen, Erbsen, Soja);
Ölkulturen: (Raps, Senf, Mohn, Oliven, Sonnenblumen, Kokos, Rizinus, Kakao, Erdnüsse);
Gurkengewächse: (Kürbis, Gurken, Melonen);
Fasergewächse: (Baumwolle, Flachs, Hanf, Jute),
Citrusfrüchte: (Orangen, Zitronen, Pampelmusen, Mandarinen);
Gemüsesorten: (Spinat, Kopfsalat, Spargel, Kohlarten, Möhren, Zwiebeln, Tomaten, Kartoffeln, Paprika)
oder Pflanzen wie Mais, Tabak, Nüsse, Kaffee, Zuckerrohr, Weinreben, Hopfen, Bananen- und Naturkautschukgewächse sowie Zierpflanzen.

Mit den Wirkstoffen der Formel I können an Pflanzen oder Pflanzenteilen (Früchte, Blüten, Laubwerk, Stengel, Knollen, Wurzeln) dieser und verwandter Nutzkulturen die auftretenden Mikroorganismen eingedämmt oder vernichtet werden, wobei auch später zuwachsende Pflanzenteile von derartigen Mikroorganismen verschont bleiben. Die Wirkstoffe sind gegen die den folgenden Klassen angehörenden phytopathogenen Pilze wirksam: Ascomycetes (z. B. Podosphaera); Basidiomycetes (z. B. Rostpilze wie Puccinia); Fungi imperfecti (z. B. Moniliales wie Cerocospora); sowie vor allem gegen die der Klasse der Phycomycetes angehörenden Oomycetes (z. B. Phytophthora und Pythium).

Überdies wirken die Verbindungen der Formel I systemisch.

Sie können ferner als Beizmittel zur Behandlung von Saatgut (Früchte, Knollen, Körner) und Pflanzenstecklingen zum Schutz vor Pilzinfektionen sowie gegen im Erdboden auftretende Mikroorganismen eingesetzt werden.

Die Erfindung betrifft somit ferner die Verwendung der Verbindungen der Formel I zur Bekämpfung und/oder Verhütung eines Befalls von Pflanzen durch phytopathogene Mikroorganismen.

Wirkstoffe der Formel I können auch im Gemisch mit z. B. pestiziden oder pflanzenwuchsverbessernden Präparaten verwendet werden. Wirkstoffe der Formel I können gleichzeitig oder nacheinander mit weiteren Wirkstoffen auf die zu behandelnde Fläche oder Pflanze gegeben werden. Diese Wirkstoffe können sowohl Düngemittel, Spurenelement-Vermittler oder andere das Pflanzenwachstum beeinflussende Präparate sein. Es können aber auch selektive Herbizide, Insektizide, Fungizide, Bakterizide, Nematizide, Molluskizide oder Gemische mehrerer dieser Präparate sein, zusammen mit gegebenenfalls weiteren in der Formulierungstechnik üblichen Trägerstoffen, Tensiden oder anderen applikationsfördernden Zusätzen.

Die Verbindungen der Formel I können für sich allein oder zusammen mit geeigneten Trägern und/oder anderen Zuschlagstoffen verwendet werden. Geeignete Träger und Zuschlagstoffe können fest oder flüssig sein und entsprechen den in der Formulierungstechnik üblichen Stoffen wie z. B. natürlichen oder regenerierten mineralischen Stoffen, Lösungs-, Dispergier-, Netz-, Haft-, Verdickungs-, Binde- oder Düngemitteln. Als Dispergier-, Netz- und Haftmittel kommen die in der Agrarchemie gebräuchlichen Tenside in Frage.

Unter Tensiden sollen hierbei grenzflächen- oder oberflächenaktive Verbindungen verstanden werden, die meistens in einer Flüssigkeit gelöst oder dispergiert sind und bevorzugt an Grenzflächen adsorbiert werden. Ein Tensidmolekül besitzt mindestens eine Gruppe, die eine Affinität zu Substanzen starker Polarität aufweist — wodurch im allgemeinen die Löslichkeit in Wasser verursacht wird — und mindestens eine weitere Gruppe mit geringer Affinität zu Wasser. Tenside sind somit Moleküle mit einem lipophilen = hydrophoben, d. h. wasserabweisenden oder fettfreundlichen Molekülteil, meist einem Kohlenwasserstoffrest mit Alkyl- und/oder Arylkomponenten und außerdem mit einem hydrophilen = lipophoben, d. h. wasserfreundlichen und fettabweisenden Molekülteil, z. B. einem Perfluoralkylrest. Die in der Praxis gebrauchten Produkte sind meistens Mischungen solcher Verbindungen. Tenside ermöglichen nicht nur eine feine Verteilung der Aktivsubstanz in einem flüssigen z. B. wäßrigen Medium, sondern auch eine erhöhte Benetzbarkeit der Pflanzen, dies führt zu einer Reduktion des Wirkstoffanteils im gebrauchsfähigen Mittel und damit zu einer geringeren Umweltbelastung.

Der Gehalt an Wirkstoff in handelsfähigen Mitteln liegt zwischen 0,01 bis 90 Gewichtsprozent, der Gehalt an Zuschlagstoffen 10 bis 99,99 Gewichtsprozent, wobei sich im allgemeinen unter den

Zuschlagstoffen 0 bis 30 Gewichtsprozent eines Tensides befinden.

Solche Mittel gehören ebenfalls zur Erfindung.

Zur Applikation können die Verbindungen der Formel I in den folgenden Aufarbeitungsformen vorliegen (wobei die Gewichts-Prozentangaben in Klammern vorteilhafte Mengen an Wirkstoff darstellen):

Feste Aufarbeitungsformen:

Stäubemittel und Streumittel (bis zu 10%); Granulate, Umhüllungsgranulate, Imprägnierungsgranulate und Homogengranulate, Pellets (Körner) (1 bis 80%);

Flüssige Aufarbeitungsformen:

a) in Wasser dispergierbare Wirkstoffkonzentrate: Spritzpulver (wettable powders) und Pasten (25–90% in der Handelspackung, 0,01 bis 15% in gebrauchsfertiger Lösung); Emulsions- und Lösungskonzentrate (10 bis 50%; 0,01 bis 15% in gebrauchsfertiger Lösung);
b) Lösungen (0,1 bis 20%); Aerosole

Herstellungsbeispiele für Formulierungen

Beispiel 2

Stäubemittel

Zur Herstellung eines a) 5%igen und b) 2%igen Stäubemittels werden die folgenden Stoffe verwendet:

a) 5 Teile einer der Verbindungen aus den Tabellen I bis III
95 Teile Talkum

b) 2 Teile einer der Verbindungen aus den Tabellen I bis III
1 Teil hochdisperse Kieselsäure
97 Teile Talkum

Die Wirkstoffe werden mit den Trägerstoffen vermischt und vermahlen und können in dieser Form zur Anwendung verstäubt werden.

Beispiel 3

Granulat

Zur Herstellung eines 5%igen Granulates werden die folgenden Stoffe verwendet:

5 Teile einer der Verbindungen aus den Tabellen I bis III
0,25 Teile epoxidiertes Pflanzenöl
0,25 Teile Cetylpolyglykoläther
3,50 Teile Polyäthylenglykol
91 Teile Kaolin (Korngröße 0,3–0,8 mm)

Die Aktivsubstanz wird mit epoxidiertem Pflanzenöl vermischt und mit 6 Teilen Aceton gelöst, hierauf wird Polyäthylenglykol und Cetylpolyglykoläther zugesetzt. Die so erhaltene Lösung wird auf Kaolin aufgesprüht, und anschließend wird das Aceton im Vakuum verdampft. Ein derartiges Mikrogranulat wird vorteilhaft zur Bekämpfung von Bodenpilzen verwendet.

Beispiel 4

Spritzpulver

Zur Herstellung eines a) 70%igen, b) 40%igen, c) und d) 25%igen, e) 10%igen Spritzpulvers werden folgende Bestandteile verwendet:

a) 70 Teile einer der Verbindungen aus den Tabellen I bis III
5 Teile Natriumdibutylnaphthylsulfonat

| | | |
|---|---|---|
| | 3 Teile | Naphthalinsulfonsäuren-Phenolsulfonsäuren-Formaldehyd-Kondensat 3 : 2 : 1 |
| | 10 Teile | Kaolin |
| | 12 Teile | Champagne-Kreide |
| b) | 40 Teile | einer der Verbindungen aus den Tabellen I bis III |
| | 5 Teile | Ligninsulfonsäure-Natriumsalz |
| | 1 Teil | Dibutylnaphthalinsulfonsäure-Natriumsalz |
| | 54 Teile | Kieselsäure |
| c) | 25 Teile | einer der Verbindungen aus den Tabellen I bis III |
| | 4,5 Teile | Calcium-Ligninsulfonat |
| | 1,9 Teile | Champagne-Kreide/Hydroxyäthylcellulose-Gemisch 1 : 1 |
| | 1,5 Teile | Natrium-dibutyl-naphthalinsulfonat |
| | 19,5 Teile | Kieselsäure |
| | 19,5 Teile | Champagne-Kreide |
| | 28,1 Teile | Kaolin |
| d) | 25 Teile | einer der Verbindungen aus den Tabellen I bis III |
| | 2,5 Teile | Isooctylphenoxy-polyoxyäthylen-äthanol |
| | 1,7 Teile | Champagne-Kreide/Hydroxyäthylcellulose-Gemisch 1 : 1 |
| | 8,3 Teile | Natriumaluminiumsilikat |
| | 16,5 Teile | Kieselgur |
| | 46 Teile | Kaolin |
| e) | 10 Teile | einer der Verbindungen aus den Tabellen I bis III |
| | 3 Teile | Gemisch der Natriumsalze von gesättigten Fettalkoholsulfaten |
| | 5 Teile | Naphthalinsulfonsäure/Formaldehyd-Kondensat |
| | 82 Teile | Kaolin |

Die Wirkstoffe werden in geeigneten Mischern mit den Zuschlagstoffen innig vermischt und auf entsprechenden Mühlen und Walzen vermahlen. Man erhält Spritzpulver von vorzüglicher Benetzbarkeit und Schwebefähigkeit, die sich mit Wasser zu Suspensionen der gewünschten Konzentration verdünnen und insbesondere zur Blattapplikation verwenden lassen.

### Beispiel 5

### Emulgierbare Konzentrate

Zur Herstellung eines 25%igen emulgierbaren Konzentrates werden folgende Stoffe verwendet:

| | |
|---|---|
| 25 Teile | einer der Verbindungen aus den Tabellen I bis III |
| 2,5 Teile | epoxydiertes Pflanzenöl |
| 10 Teile | eines Alkylarylsulfonat/Fettalkoholpolyglykoläther-Gemisches |
| 5 Teile | Dimethylformamid |
| 57,5 Teile | Xylol |

Aus solchen Konzentrationen können durch Verdünnen mit Wasser Emulsionen der gewünschten Anwendungskonzentration hergestellt werden, die besonders zur Blattapplikation geeignet sind.

Die Erfindung umfaßt auch die Verwendung von Wirkstoffen der Formel I zur Bekämpfung und/oder Verhütung eines Befalls von Pflanzen durch phytopathogene Mikroorganismen, gekennzeichnet durch Applikation von 50 g bis 5 kg, bevorzugt 100 g bis 2 kg, insbesondere bevorzugt 200 g bis 600 g Aktivsubstanz je Hektar.

### Biologische Beispiele

In den nachfolgenden Versuchen Nr. 6 und 8 wurde die Verbindung Nr. 328

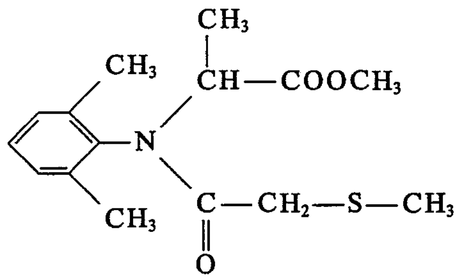

(A)

aus der Deutschen Offenlegungsschrift Nr. 2 515 091 zum Vergleich herangezogen.

## Beispiel 6

### Wirkung gegen Phytophthora infestans auf Tomatenpflanzen

#### a) Residual-protektive Wirkung

Tomatenpflanzen wurden nach 3wöchiger Anzucht mit einer aus Spritzpulver des Wirkstoffes hergestellten Spritzbrühe (0,02% Aktivsubstanz) besprüht. Nach 24 Stunden wurden die behandelten Pflanzen mit einer Sporangiensuspension des Pilzes infiziert. Die Beurteilung des Pilzbefalls erfolgte nach einer Inkubation der infizierten Pflanzen während 5 Tagen bei 90 – 100% relativer Luftfeuchtigkeit und 20° C.

Im Vergleich zu unbehandelten Kontrollpflanzen (100% Befall) zeigten die Tomatenpflanzen, die mit einer der Verbindungen Nr. 1 bis 6, 8, 10, 11, 12, 18, 20 oder 26 behandelt wurden, weniger als 10% Befall. Die Verbindungen Nr. 2, 6 und 26 hemmten den Befall vollständig.

Bei einem Aktivsubstanzanteil von 0,006% bewirkt die Vergleichssubstanz A eine Hemmung des Befalls auf 5 bis 10%, die Verbindungen Nr. 2, 6 und 26 verhinderten den Befall jedoch nahezu vollständig (0 bis 5%).

#### b) Residual-kurative Wirkung

Tomatenpflanzen wurden nach 3wöchiger Anzucht mit einer Sporangiensuspension des Pilzes infiziert. Nach einer Inkubation von 22 Stunden in einer Feuchtkammer bei 90 – 100% relativer Luftfeuchtigkeit und 20° C wurden die infizierten Pflanzen getrocknet und mit einer aus Spritzpulver des Wirkstoffes hergestellten Spritzbrühe (0,06% Aktivsubstanz) besprüht. Nach dem Antrocknen des Spritzbelages wurden die behandelten Pflanzen wieder in die Feuchtkammer gebracht. Die Beurteilung des Pilzbefalls erfolgte 5 Tage nach der Infektion.

Tomatenpflanzen, die mit einer Spritzbrühe behandelt wurden, die eine der Verbindungen der Formel I enthielt, zeigten einen wesentlich geringeren Pilzbefall als unbehandelte Kontrollpflanzen. Insbesondere die Verbindungen Nr. 1, 2, 3, 6, 18 und 26 hemmten den Befall auf 0 bis 5%. Bei verminderter Prüfkonzentration (0,006%) bewirkte Vergleichssubstanz A zwar eine Hemmung auf weniger als 10%, die Verbindungen Nr. 1, 2, 3, 6 und 26 zeigten jedoch noch eine unveränderte Aktivität (0 bis 5% Befall). Unbehandelte aber infizierte Kontrollpflanzen zeigten einen Befall von 100%.

#### c) Systemische Wirkung

Zu Tomatenpflanzen wurde nach 3wöchiger Anzucht eine aus Spritzpulver des Wirkstoffes hergestellte Spritzbrühe gegossen (0,006% Aktivsubstanz bezogen auf das Erdvolumen). Es wurde dabei darauf geachtet, daß die Spritzbrühe nicht mit den oberirdischen Pflanzenteilen in Berührung kam. Nach 48 Stunden wurden die behandelten Pflanzen mit einer Sporangiensuspension des Pilzes infiziert. Die Beurteilung des Pilsbefalls erfolgte nach einer Inkubation der infizierten Pflanzen während 5 Tagen bei 90 – 100% relativer Luftfeuchtigkeit und 20° C.

In diesem Versuch zeigten die Verbindungen der Formel I eine sehr gute systemische Wirkung. Gegenüber unbehandelten, aber infizierten Kontrollpflanzen (100% Befall) zeigten Tomatenpflanzen, die mit einer Spritzbrühe behandelt wurden, die eine der Verbindungen A, 1 bis 6, 8, 10, 11, 12, 18 oder 26 enthielt, nur einen Pilzbefall von 0 bis 5%. Selbst bei einer Konzentration 0,002% zeigten die Verbindungen 2, 6, 8, 18 und 26 unverminderte Aktivität.

## Beispiel 7

### Wirkung gegen Cercospora arachidicola auf Erdnußpflanzen

### Residual-protektive Wirkung

10–15 cm hohe Erdnußpflanzen wurden mit einer aus Spritzpulver der Wirksubstanz hergestellten Spritzbrühe (0,02% Aktivsubstanz) besprüht und 48 Stunden später mit einer Konidiensuspension des Pilzes infiziert. Die infizierten Pflanzen wurden während 72 Stunden bei ca. 21°C und hoher Luftfeuchtigkeit inkubiert und anschließend bis zum Auftreten der typischen Blattfelcken in einem Gewächshaus aufgestellt. Die Beurteilung der fungiziden Wirkung erfolgte 12 Tage nach der Infektion basierend auf Anzahl und Größe der auftretenden Flecken.

Erdnußpflanzen, die mit einer Spritzbrühe behandelt wurden, die als Wirkstoff eine der Verbindungen Nr. 1, 2, 8, 10, 18 oder 26 enthielt, hemmten den Pilzbefall auf weniger als 10%; die Substanz Nr. 2 hemmte den Befall sogar vollständig. Unbehandelte, aber infizierte Kontrollpflanzen zeigten einen Pilzbefall von 100%.

## Beispiel 8

### Wirkung gegen Pythium debaryanum auf Mais

### Wirkung nach Bodenapplikation

Der Pilz wurde auf Karottenschnitzel-Nährlösung kultiviert und einer Erde-Sand-Mischung beigegeben. Die so infizierte Erde wurde in Blumentöpfe abgefüllt und mit Zuckerrübensamen besät. Gleich nach der Aussaat wurden die als Spritzpulver formulierten Versuchspräparate als wäßrige Suspension über die Erde gegossen (20 ppm Wirkstoff bezogen auf das Erdvolumen). Die Töpfe wurden darauf während 2–3 Wochen im Gewächshaus bei ca. 20°C aufgestellt. Die Erde wurde dabei durch leichtes Überbrausen stets gleichmäßig feucht gehalten.

Bei der Auswertung der Tests wurde der Auflauf der Maispflanzen sowie der Anteil gesunder und kranker Pflanzen bestimmt, hierbei zeigten die Verbindungen aus den Tabellen I bis III eine sehr gute fungizide Wirkung. Nach der Behandlung mit einer der Verbindungen Nr. 1 bis 6, 8, 10, 11, 12, 18, 25, 26 oder mit Vergleichssubstanz A liefen über 85% der Maispflanzen auf und zeigten ein gesundes Aussehen. Bei vierfacher Verdünnung konnte mit den Verbindungen Nr. 2, 6, 8, 18 und 26 noch eine gleiche Wirkung erreicht werden. Völlig übereinstimmende Resultate wurden bei analogen Versuchen

## Beispiel 9

### Wirkung gegen Podosphaera leucotricha auf Äpfel

### Residual-protektive Wirkung

Apfelsämlinge mit ca. 5 entwickelten Blättern wurden mit einer aus Spritzpulver des Wirkstoffes hergestellten Spritzbrühe (0,006% Aktivsubstanz) besprüht. Nach 24 Stunden wurden die behandelten Pflanzen mit einer Konidiensuspension des Pilzes infiziert und in einer Klimakammer bei 70% relativer Luftfeuchtigkeit und 20°C aufgestellt. Die Beurteilung des Pilsbefalls erfolgte 12 Tage nach der Infektion.

Die Wirkstoffe aus den Tabellen I bis III zeigten bei diesem Versuch eine sehr gute residualprotektive Wirkung. Apfelsämlinge, die mit einer der Verbindungen Nr. 1, 2, 3, 6, 8, 11, 18 oder 26 behandelt wurden zeigten einen Pilzbefall von weniger als 20%. Die unbehandelten, aber infizierten Kontrollpflanzen wiesen einen Befall von 100% auf.

**Patentansprüche für die Vertragsstaaten: BE, CH, DE, FR, GB, IT, LI, NL**

1. Verbindungen der Formel I

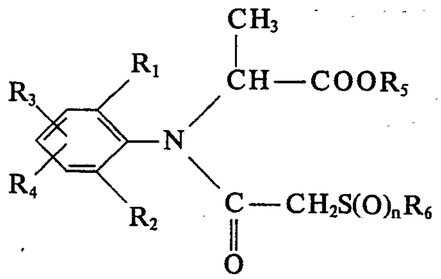

(I)

worin $R_1$ $C_1-C_3$-Alkyl, $C_1-C_3$-Alkoxy oder Halogen; $R_2$ $C_1-C_3$-Alkyl, $C_1-C_3$-Alkoxy oder Halogen; $R_3$ Wasserstoff, $C_1-C_3$-Alkyl oder Halogen; $R_4$ Wasserstoff oder Methyl bedeuten, $R_5$ für $C_1-C_3$-Alkyl steht und $R_6$ $C_1-C_4$-Alkyl und n 1 oder 2 bedeuten.

2. Verbindungen der Formel I nach Anspruch 1, dadurch gekennzeichnet, daß $R_1$ für $C_1-C_2$-Alkyl; $R_2$ für $C_1-C_2$-Alkoxy oder Halogen; $R_3$ für Wasserstoff, $C_1-C_2$-Alkyl oder Halogen; $R_4$ für Wasserstcff oder Methyl; $R_5$ für $C_1-C_3$-Alkyl, $R_6$ für $C_1-C_3$-Alkyl stehen und n die Zahl 1 oder 2 bedeutet.

3. Verbindungen der Formel I nach Anspruch 1, dadurch gekennzeichnet, daß $R_1$ für Methyl; $R_2$ für Methyl, Methoxy oder Chlor;, $R_3$ für Wasserstoff, Methyl oder Chlor; $R_4$ für Wasserstoff oder Methyl, $R_5$ für $C_{1-2}$-Alkyl; $R_6$ für $C_1-C_3$-Alkyl stehen und n die Zahl 2 bedeutet.

4. Verbindungen der Formel I nach Anspruch 1, dadurch gekennzeichnet, daß $R_1$ und $R_2$ für Methyl stehen; $R_3$ Wasserstoff, 3-Methyl oder 3-Chlor bedeutet; $R_4$ für Wasserstoff, 5-Methyl oder 5-Chlor steht; $R_5$ Methyl; $R_6$ $C_1-C_3$-Alkyl bedeutet und n für die Zahl 1 oder 2 steht.

5. Die Verbindung N-(1'-Methoxycarbonyl-äthyl)-N-methylsulfonylacetyl-2,6-dimethylanilin gemäß Anspruch 1.

6. Die Verbindung N-(1'-Methoxycarbonyl-äthyl)-N-äthylsulfonylacetyl-2,6-dimethylanilin gemäß Anspruch 1.

7. Die Verbindung N-(1'-Methoxycarbonyl-äthyl)-N-methylsulfonylacetyl-2,3,6-trimethylanilin gemäß Anspruch 1.

8. Verfahren zur Herstellung von Verbindungen der Formel I gemäß Anspruch 1, gekennzeichnet durch

Oxidation einer Verbindung der Formel IV

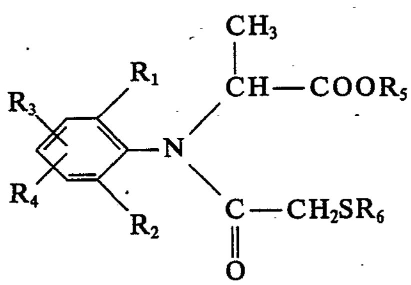

(IV)

oder durch Reaktion einer Verbindung der Formel II

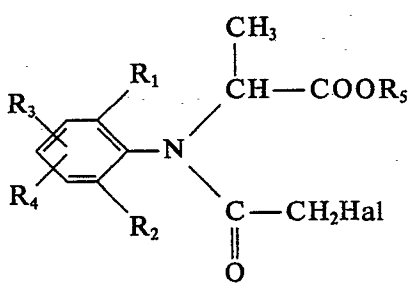

(II)

mit einer Thioverbindung der Formel V

$MS(O)_nR_6$ (V)

wobei $R_1$, $R_2$, $R_3$, $R_4$, $R_5$, $R_6$ und n die unter Formel I angegebenen Bedeutungen haben, Hal für Halogen steht und M Wasserstoff oder ein Metallkation bedeutet.

9. Verfahren nach Anspruch 8, dadurch gekennzeichnet, daß zur Oxidation von Verbindungen der Formel IV eine Persäure verwendet wird.

10. Verfahren nach Anspruch 8, dadurch gekennzeichnet, daß der Substituent M in Formel V für ein Alkaliion steht.

11. Mittel zur Bekämpfung von Mikroorganismen, dadurch gekennzeichnet, daß es als mindestens eine aktive Komponente eine Verbindung der Formel I nach Anspruch 1 zusammen mit einem oder mit mehreren Trägersubstanzen und/oder oberflächenaktiven Stoffen enthält.

12. Mittel nach Anspruch 11, dadurch gekennzeichnet, daß es als mindestens eine aktive Komponente eine Verbindung der Formel I nach einem der Ansprüche 2 bis 7 enthält.

13. Verwendung von Verbindungen der Formel I nach Anspruch 1 zur Bekämpfung und/oder Verhütung eines Befalls durch phytopathogene Mikroorganismen.

14. Verwendung nach Anspruch 13 von Verbindungen der Formel I gemäß einem der Ansprüche 2 bis 7.

15. Verwendung nach Anspruch 13, dadurch gekennzeichnet, daß es sich bei den Mikroorganismen um phytopathogene Pilze handelt.

**Patentansprüche für den Vertragsstaat: AT**

1. Mittel zur Bekämpfung von Mikroorganismen, dadurch gekennzeichnet, daß es als mindestens eine aktive Komponente eine Verbindung der Formel I

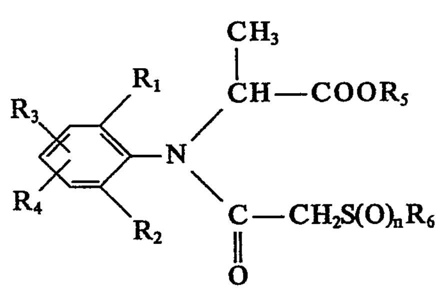

(I)

worin $R_1$ $C_1-C_3$-Alkyl, $C_1-C_3$-Alkoxy oder Halogen; $R_2$ $C_1-C_2$-Alkyl, $C_1-C_3$-Alkoxy oder Halogen; $R_3$ Wasserstoff, $C_1-C_3$-Alkyl oder Halogen; $R_4$ Wasserstoff oder Methyl bedeuten, $R_5$ für $C_1-C_3$-Alkyl steht und $R_6$ $C_1-C_4$-Alkyl und n 1 oder 2 bedeuten, zusammen mit einem oder mit mehreren Trägersubstanzen und/oder oberflächenaktiven Stoffen enthält.

2. Mittel nach Anspruch 1, dadurch gekennzeichnet, daß es als mindestens eine aktive Komponente eine Verbindung der Formel I enthält, worin $R_1$ für $C_1-C_2$-Alkyl; $R_2$ für $C_1-C_2$-Alkyl, $C_1-C_2$-Alkoxy oder Halogen; $R_3$ für Wasserstoff, $C_1-C_2$-Alkyl oder Halogen; $R_4$ für Wasserstoff oder Methyl; $R_5$ für $C_1-C_3$-Alkyl, $R_6$ für $C_1-C_3$-Alkyl stehen und n die Zahl 1 oder 2 bedeutet.

3. Mittel nach Anspruch 1, dadurch gekennzeichnet, daß es als mindestens eine aktive Komponente eine Verbindung der Formel I enthält, worin $R_1$ für Methyl; $R_2$ für Methyl, Methoxy oder Chlor; $R_3$ für Wasserstoff, Methyl oder Chlor; $R_4$ für Wasserstoff oder Methyl, $R_5$ für $C_1-C_2$-Alkyl; $R_6$ für $C_1-C_3$-Alkyl stehen und n die Zahl 2 bedeutet.

4. Mittel nach Anspruch 1, dadurch gekennzeichnet, daß es als mindestens eine aktive Komponente eine Verbindung der Formel I enthält, worin $R_1$ und $R_2$ für Methyl stehen; $R_3$ Wasserstoff, 3-Methyl oder 3-Chlor bedeutet; $R_4$ für Wasserstoff, 5-Methyl oder 5-Chlor steht; $R_5$ Methyl; $R_6$ $C_1-C_3$-Alkyl bedeutet und n für die Zahl 1 oder 2 steht.

5. Mittel nach Anspruch 1, dadurch gekennzeichnet, daß es als mindestens eine aktive Komponente die Verbindung N-(1'-Methoxycarbonyl-äthyl)-N-methylsulfonylacetyl-2,6-dimethylanilin enthält.

6. Mittel nach Anspruch 1, dadurch gekennzeichnet, daß es als mindestens eine aktive Komponente die Verbindung N-(1'-Methoxycarbonyl-äthyl)-N-äthylsulfonylacetyl-2,6-dimethylanilin enthält.

7. Mittel nach Anspruch 1, dadurch gekennzeichnet, daß es als mindestens eine aktive Komponente die Verbindung N-(1'-Methoxycarbonyl-äthyl)-N-methylsulfonylacetyl-2,3,6-trimethylanilin enthält.

8. Verfahren zur Herstellung der in den Ansprüchen 1 bis 7 definierten Verbindungen der Formel I, gekennzeichnet durch

Oxidation einer Verbindung der Formel IV

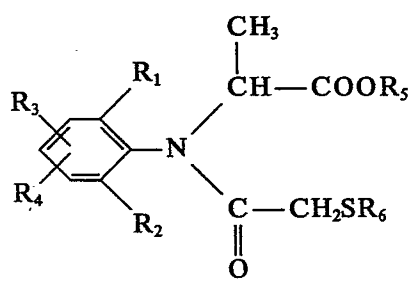

(IV)

oder durch Reaktion einer Verbindung der Formel II

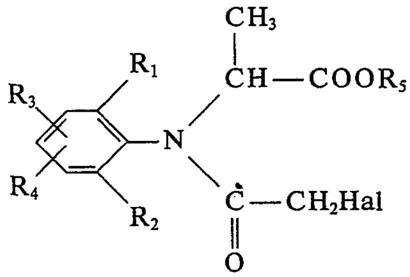

(II)

mit einer Thioverbindung der Formel V

$MS(O)_nR_6$ (V)

wobei $R_1$, $R_2$, $R_3$, $R_4$, $R_5$, $R_6$ und n die unter Formel I angegebenen Bedeutungen haben, Hal für Halogen steht und M Wasserstoff oder ein Metallkation bedeutet.

9. Verfahren nach Anspruch 8, dadurch gekennzeichnet, daß zur Oxidation von Verbindungen der Formel IV eine Persäure verwendet wird.

10. Verfahren nach Anspruch 8, dadurch gekennzeichnet, daß der Substituent M in Formel V für ein Alkaliion steht.

11. Verwendung der in den Ansprüchen 1 bis 8 definierten Verbindungen der Formel I zur Bekämpfung und/oder präventiven Verhütung eines Befalls von Pflanzen durch phytopathogene Mikroorganismen.

12. Verwendung nach Anspruch 11, dadurch gekennzeichnet, daß es sich bei den Mikroorganismen um phytopathogene Pilze handelt.

**Claims (for the Contracting states: BE, CH, DE, FR, GB, IT, LI, NL**

1. A compound of the formula I

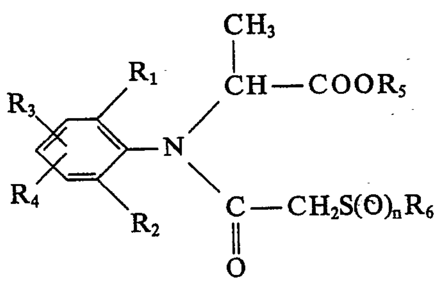

(I)

wherein $R_1$ is $C_1-C_3$-alkyl, $C_1-C_3$-alkoxy or halogen; $R_2$ is $C_1-C_3$-alkyl, $C_1-C_3$-alkoxy or halogen; $R_3$ is hydrogen, $C_1-C_3$-alkyl or halogen; $R_4$ is hydrogen or methyl, $R_5$ is $C_1-C_3$-alkyl, $R_6$ is $C_1-C_4$-alkyl, and n is 1 or 2.

2. A compound of the formula I according to claim 1, wherein $R_1$ is $C_1-C_2$-alkyl; $R_2$ is $C_1-C_2$-alkyl, $C_1-C_2$-alkoxy or halogen; $R_3$ ist hydrogen, $C_1-C_2$-alkyl or halogen; $R_4$ is hydrogen or methyl; $R_5$ is $C_1-C_3$-alkyl, $R_6$ is $C_1-C_3$-alkyl, and n is the number 1 or 2.

3. A compound of the formula I according to claim 1, wherein $R_1$ is methyl; $R_2$ is methyl, methoxy or chlorine; $R_3$ is hydrogen, methyl or chlorine; $R_4$ is hydrogen or methyl; $R_5$ is $C_1-C_2$-alkyl, $R_6$ is $C_1-C_3$-alkyl, and n is the number 2.

4. A compound of the formula I according to claim 1, wherein $R_1$ and $R_2$ are each methyl; $R_3$ is hydrogen, 3-methyl or 3-chlorine; $R_4$ is hydrogen, 5-methyl or 5-chlorine; $R_5$ is methyl, $R_6$ is $C_1-C_3$-alkyl, and n is the number 1 or 2.

5. The compound N-(1'-methoxycarbonyl-ethyl)-N-methylsulfonylacetyl-2,6-dimethylaniline according to claim 1.

6. The compound N-(1'-methoxycarbonyl-ethyl)-N-ethylsulfonylacetyl-2,6-dimethylaniline according to claim 1.

7. The compound N-(1'-methoxycarbonyl-ethyl)-N-methylsulfonylacetyl-2,3,6-trimethylaniline according to claim 1.

8. A process for producing a compound of the formula I according to claim 1, which process comprises:

oxidation of a compound of the formula IV

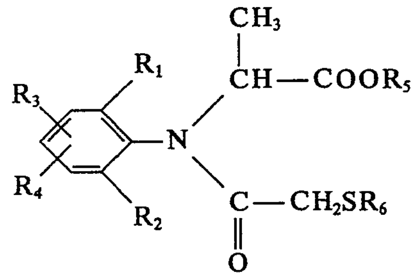

(IV)

or reaction of a compound of the formula II

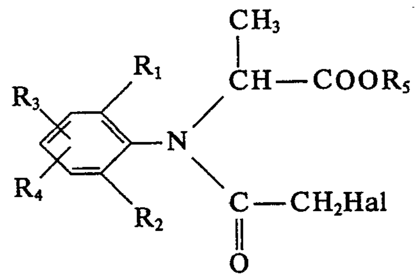

(II)

with a thio compound of the formula V

$MS(O)_nR_6$ (V)

wherein $R_1$, $R_2$, $R_3$, $R_4$, $R_5$, $R_6$ and n have the meanings defined under the formula I, »Hal« denotes halogen, and M is hydrogen or a metal cation.

9. A process according to claim 8, wherein a per acid is used for the oxidation of compounds of the formula IV.

10. A process according to claim 8, wherein the substituent M in the formula V is an alkali ion.

11. A composition for combating microorganisms, whicᵇ composition contains, as at least one active ingredient, a compound of the formula I according to claim 1, together with one or more carriers and/or surface-active substances.

12. A composition according to claim 11, which contains, as at least one active ingredient, a compund of the formula I as claimed in any one of claims 2 to 7 inclusive.

13. A method of combating and/or preventing infection caused by phytopathogenic microorganisms, which method comprises the use of a compund of the formula I according to claim 1.

14. A method according to claim 13 comprising the use of a compound of the formula I as claimed in any one of claims 2 to 7 inclusive.

15. A method according to claim 13, wherein the microorganisms concerned are phytopathogenic fungi.

**Claims for Contracting state: AT**

1. A composition for combating microorganisms, which contains, as at least one active ingredient, a compound of the formula I

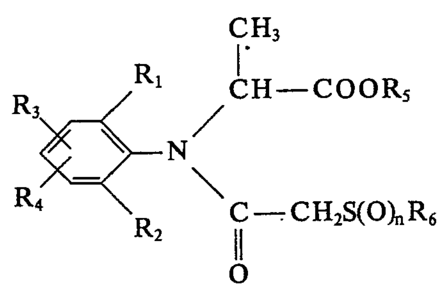

(I)

wherein $R_1$ is $C_1-C_3$-alkyl, $C_1-C_3$-alkoxy or halogen, $R_2$ is $C_1-C_2$-alkyl, $C_1-C_3$-alkoxy or halogen, $R_3$ is hydrogen, $C_1-C_3$-alkyl or halogen, $R_4$ is hydrogen or methyl, $R_5$ is $C_1-C_3$-alkyl, $R_6$ is $C_1-C_4$-alkyl, and n

is 1 or 2, together with one or more carriers and/or surface-active substances.

2. A composition according to claim 1, which contains, as at least one active ingredient, a compound of the formula I wherein $R_1$ is $C_1-C_2$-alkyl, $R_2$ is $C_1-C_2$-alkyl, $C_1-C_2$-alkkoxy or halogen, $R_3$ is hydrogen, $C_1-C_2$-alkyl or halogen, $R_4$ is hydrogen or methyl, $R_5$ is $C_1-C_3$-alkyl, $R_6$ is $C_1-C_3$-alkyl, and n is the number 1 or 2.

3. A composition according to claim 1, which contains, as at least one active ingredient, a compound of the formula I wherein $R_1$ is methyl, $R_2$ is methyl, methoxy or chlorine, $R_3$ is hydrogen, methyl or chlorine, $R_4$ is hydrogen or methyl, $R_5$ is $C_1-C_2$-alkyl, $R_6$ is $C_1-C_3$-alkyl, and n is the number 2.

4. A composition according to claim 1, which contains, as at least one active ingredient, a compound of the formula I wherein $R_1$ and $R_2$ are each methyl, $R_3$ is hydrogen, 3-methyl or 3-chlorine, $R_4$ is hydrogen, 5-methyl or 5-chlorine, $R_5$ is methyl, $R_6$ is $C_1-C_3$-alkyl, and n is the number 1 or 2.

5. A composition according to claim 1, which contains, as at least one active ingredient, the compound: N-(1'-methoxycarbonyl-ethyl)-N-methylsulfonylacetyl-2,6-dimethylaniline.

6. A composition according to claim 1, which contains, as at least one active ingredient, the compound: N-(1'-methoxycarbonyl-ethyl)-N-ethylsulfonylacetyl-2,6-dimethylaniline.

7. A composition according to claim 1, which contains, as at least one active ingredient, the compound: N-(1'-methoxycarbonyl-ethyl)-N-methylsulfonylacetyl-2,3,6-trimethylaniline.

8. A process for producing a compound of the formula I as defined in claims 1 to 7, which process comprises:

oxidation of a compound of the formula IV

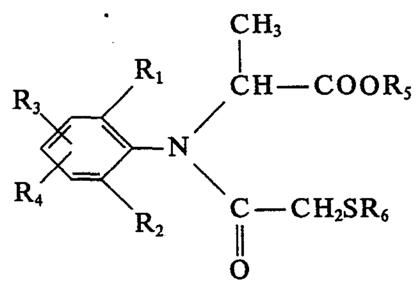

(IV)

or reaction of a compound of the formula II

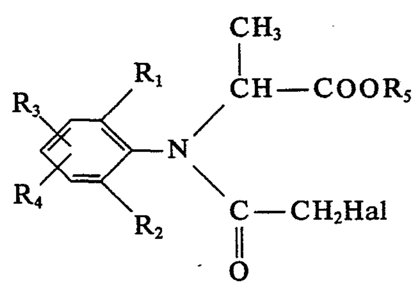

(II)

with a thio compound of the formula V

$MS(O)_nR_6$ (V)

wherein $R_1$, $R_2$, $R_3$, $R_4$, $R_5$, $R_6$ and n have the meanings definied under the formula I, »Hal« denotes halogen, and M is hydrogen or a metal cation.

9. A process according to claim 8, wherein a per acid is used for the oxidation of compunds of the formula IV.

10. A procesa according to claim 8, wherein the substituent M in the formula V is an alkali ion.

11. A method of combating and/or preventing infection caused by phytopathogenic microorganisms, which method comprises the use of a compound as defined in any one of claims 1 to 8.

12. A method according to claim 11, wherein the microorganisms concerned are phytopathogenic fungi.

**Revendications pour les Etats contractans: BE, CH, DE, FR, GB, IT, LI, NL**

1. Composés de formule I

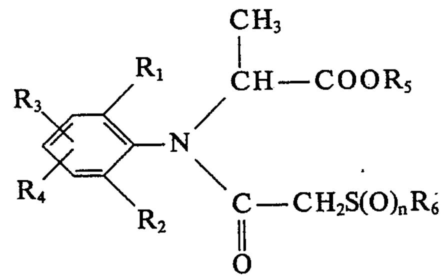

(I)

où $R_1$ représente un alcoyle en $C_1$ à $C_3$, un alcoxy en $C_1$ à $C_3$ ou un halogène; $R_2$ représente un alcoyle en $C_1$ à $C_3$, un alcoxy en $C_1$ à $C_3$ ou un halogène; $R_3$ représente un hydrogène, un alcoyle en $C_1$ à $C_3$ ou un halogène; $R_4$ représente un hydrogène ou un méthyle, $R_5$ représente un alcoyle en $C_1$ à $C_3$ et $R_6$ représente un alcoyle en $C_1$ à $C_4$ et n vaut 1 ou 2.

2. Composés de formule I selon la revendicatin 1, caractérisés en ce que $R_1$ représente un alcoyle en $C_1$ à $C_2$; $R_2$ représente un alcoyle en $C_1$ à $C_2$, un alcoxy en $C_1$ à $C_2$ ou un halogène; $R_3$ représente un hydrogène, un alcoyle en $C_1$ à $C_2$ ou un halogène; $R_4$ représente un hydrogène ou un méthyle; $R_5$ représente un alcoyle en $C_1$ à $C_3$, $R_6$ un alcoyle en $C_1$ à $C_3$ et n représente le nombre 1 ou 2.

3. Composés de formule I selon la revendication 1, caractérisés en ce que $R_1$ représente un méthyle; $R_2$ un méthyle, un méthoxy ou un chlore, $R_3$ un hydrogène, un méthyle ou un chlore; $R_4$ un hydrogène ou un méthyle; $R_5$ un alcoyle en $C_1$ à $C_2$; $R_6$ un alcoyle en $C_1$ à $C_3$ et n représente le nombre 2.

4. Composés de formule I selon la revendication 1, caractérisés en ce que $R_1$ et $R_2$ représentent un méthyle; $R_3$ un hydrogène, un 3-méthyle cu un 3-chlore; $R_4$ un hydrogène, un 5-méthyle ou un 5-chlore; $R_5$ un méthyle; $R_6$ un alcoyle en $C_1$ à $C_3$ et n représente le nombre 1 ou 2.

5. Le composé N-(1'-méthoxycarbonyl-éthyl)-N-méthyl-sulfonylacétyl-2,6-diméthylaniline selon la revendication 1.

6. Le composé N-(1'-méthoxycarbonyl-éthyl)-N-éthylsulfonylacétyl-2,6-diméthylaniline selon la revendication 1.

7. Le composé N-(1'-méthoxycarbonyl-éthyl)-N-méthylsulfonylacétyl-2,3,6-triméthylaniline selon la revendication 1.

8. Procédé de préparation de composés de formule I selon la revendication 1, caractérisé par

l'oxydation d'un composé de formule IV

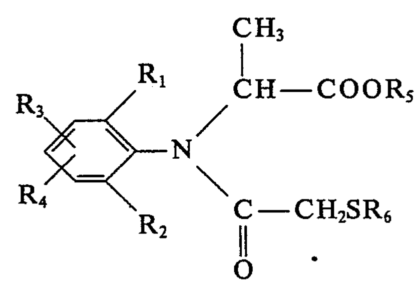

(IV)

ou la réaction d'un composé de formule II

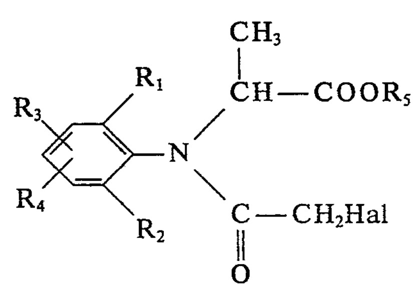

(II)

avec ur. composé thio de formule V

$MS(O)_nR_6$ (V)

où $R_1$, $R_2$, $R_3$, $R_4$, $R_5$, $R_6$ et n ont les significations données pour la formule I, Hal représente un halogène et M un hydrogène ou un cation métallique.

9. Procédé selon la revendication 8, cara‑‑‑isé en ce que pour l'oxydation de composés de formule IV on utilise un peracide.

10. Procédé selon la revendication 8, caractérisé en ce que le substituant M dans la formule V représente un ion alcalin.

11. Agent de lutte contre les micoorganismes, caractérisé en ce qu'il contient comme composant actif au moins un composé de formule I selon la revendication 1 avec un ou plusieurs supports et/ou agents tenioactifs.

12. Agent selon la revendicaiton 11, caractérisé en ce qu'il contient comme composant actif au moins un composé de formule I selon l'une des revendications 2 à 7.

13. Application de composés de formule I selon la revendication 1 à la lutte et/ou la prévention d'une attaque par des microorganismes phytopathogènes.

14. Application selon la revendication 13 de composés de formule I selon l'une des revendications 2 à 7.

15. Application selon la revendicatin 13, caractérisée en ce qu'il s'agit pour les microorganismes de champignons phytopathogènes.

**Revendications pour l'Etat contractant: AT**

1. Agent de lutte contre les microorganismes, caractérisé en ce qu'il contient comme composant actif au moins un composé de formule I

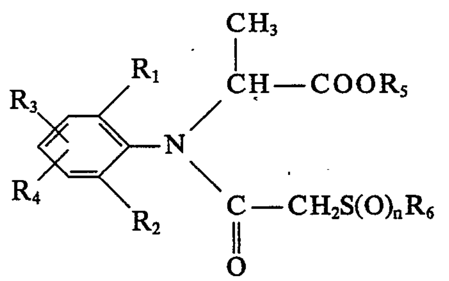

(I)

où $R_1$ représente un alcoyle en $C_1$ à $C_3$, un alcoxy en $C_1$ à $C_3$ ou un halogène; $R_2$ un alcoyle en $C_1$ à $C_2$, un alcoxy en $C_1$ à $C_3$ ou un halogène; $R_3$ un hydrogène, un alcoyle en $C_1$ à $C_3$ ou un halogène; $R_4$ un hydrogène ou un méthyle; $R_5$ un alcoyle en $C_1$ à $C_3$ et $R_6$ un alcoyle en $C_1$ à $C_4$ et n vaut 1 ou 2, avec un ou plusieurs supports et/ou agents tensioactifs.

2. Agent selon la revendication 1 caractérisé en ce qu'il contient comme composant actif au moins un composé de formule I où $R_1$ représente un alcoyle en $C_1$ à $C_2$; $R_2$ un alcoyle en $C_1$ à $C_2$, un alcoxy en $C_1$ à $C_2$ ou un halogène; $R_3$ représente un hydrogène, un alcoyle en $C_1$ à $C_2$ ou un halogène, $R_4$ un hydrogène ou un méthyle; $R_5$ un alcoyle en $C_1$ à $C_3$, $R_6$ un alcoyle en $C_1$ à $C_3$ et n le nombre 1 ou 2.

3. Agent selon la revendication 1, caractérisé en ce qu'il contient comme somposant actif au moins un composé de formule I où $R_1$ représente un méthyle, $R_2$ un méthyle, un méthoxy ou un chlore, $R_3$ un hydrogène, un méthyle ou un chlore, $R_4$ un hydrogène ou un méthyle, $R_5$ un alcoyle en $C_1$ à $C_2$; $R_6$ un alcoyle en $C_1$ à $C_3$ et n le nombre 2.

4. Agent selon la revendication 1 caractérisé en ce qu'il contient comme composant actif au moins un composé de formule I où $R_1$ et $R_2$ représentent un méthyle, $R_3$ un hydrogène, un 3-méthyle ou un 3-chlore, $R_4$ un hydrogène, un 5-méthyle ou un 5-chlore; $R_5$ un méthyle; $R_6$ un alcoyle en $C_1$ à $C_3$ et n le nombre 1 ou 2.

5. Agent selon la revendication 1, caractérisé en ce qu'il contient au moins comme composant actif le composé N-(1'-méthoxycarbonyl-éthyl)-N-méthylsulfonylacétyl-2,6-diméthylaniline.

6. Agent selon la revendication 1 caractérisé en ce qu'il contient au moins comme composant actif le composé N-(1'-méthoxycarbonyl-éthyl)-N-éthylsulfonylacétyl-2,6-diméthylaniline.

7. Agent selon la revendication 1 caractérisé en ce qu'il contient au moins comme composant actif le composé N-(1-méthoxycarbonyl-éthyl)-N-méthylsulfonylacétyl-2,3,6-triméthylaniline.

8. Procédé de préparation des composés de formule I définis dans les revendications 1 à 7, caractérisé par

l'oxydation d'un composé de formule IV

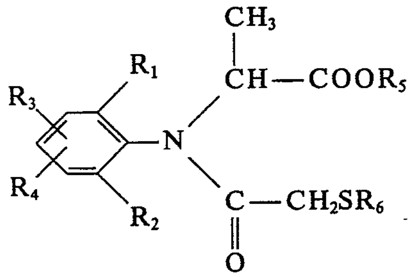

(IV)

ou la réaction d'un composé de formule II

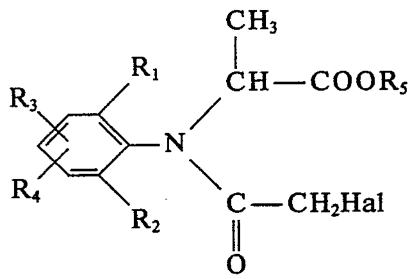

(II)

avec un composé thio de formule V

$MS(O)_nR_6$ (V)

où $R_1$, $R_2$, $R_3$, $R_4$, $R_5$, $R_6$ et n ont les significations données pour la formule I, Hal représente un halogène et M un hydrogène ou un cation métallique.

9. Procédé selon la revendication 8, caractérisé en ce que pour l'oxydation des composés de formule IV on utilise un peracide.

10. Procédé selon la revendication 8, caractérisé en ce que le substituant M dans la formule V représente un ion alcalin.

11. Application des composés de formule I définis dans les revendications 1 à 8 à la lutte et/ou la prévention d'une attaque des plantes par des microorganismes phytopathogènes.

12. Application selon la revendication 11, caractérisée en ce que, pour les microorganismes, il s'agit de champignons phytopathogènes.